(19) Europäisches Patentamt
European Patent Office
Office européen des brevets

(11) EP 3 378 305 A1

(12) DEMANDE DE BREVET EUROPEEN

(43) Date de publication:
26.09.2018 Bulletin 2018/39

(51) Int Cl.:
*A01K 61/80* (2017.01)

(21) Numéro de dépôt: 18163962.6

(22) Date de dépôt: 26.03.2018

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 24.03.2017 FR 1752442

(71) Demandeur: Termet, Sébastien
29120 Sainte Marine (FR)

(72) Inventeur: Termet, Sébastien
29120 Sainte Marine (FR)

(74) Mandataire: Ipside
4, rue de Kerogan
29337 Quimper Cedex (FR)

(54) **SYSTÈME DE DISTRIBUTION DE GRANULES POUR L'ÉLEVAGE D'ANIMAUX AQUATIQUES**

(57) L'invention concerne un système de distribution de granules pour l'élevage d'animaux aquatiques, comprenant : une canalisation d'amenée (20) par jet d'air adaptée à acheminer des granules dans au moins deux points de dépose (21) d'un bassin d'élevage (26), un dispositif de dosage (22) de granules comportant une zone de stockage de granules avec une sortie, un dispositif de distribution (24) de granules comportant une entrée de granules reliée au dispositif de dosage et une sortie reliée à la canalisation d'amenée, une vanne d'aiguillage (25) positionnée dans la canalisation d'amenée (20), ladite vanne d'aiguillage (25) comprenant un orifice d'entrée et au moins deux orifices de sortie, au moins un bassin d'élevage (26), le bassin comporte un capteur de mesure du milieu aquatique sélectionné parmi : un capteur de température, un capteur du taux de nitrate, un capteur de mesure d'oxygénation, un capteur de turbidité, un capteur niveau sonore, un terminal communiquant (27) adapté à la lecture d'information du système et la commande de distribution de nourriture et une unité de commande (28).

Fig. 1

EP 3 378 305 A1

**Description**

DOMAINE TECHNIQUE DE L'INVENTION

La présente invention concerne un système de distribution de granules pour l'élevage d'animaux aquatiques. Elle s'applique, en particulier, à l'aquaculture et notamment la pisciculture terrestre de grossissement, d'alevinage, et les laboratoires de recherche.

ETAT DE LA TECHNIQUE

Bien souvent les aliments pour animaux sont fragiles et friables. Chargés en lipides, ils se composent de poudres compactées à hautes températures suivant les différents procédés des fournisseurs de granulés. Quel que soit le procédé, les granulés pour poissons sont très fragiles. D'une granulométrie de 1 à 13 mm, les élevages de grossissement effectuent des rationnements pouvant atteindre 300 kg sur des bassins de 60 m de longueur sur 6 m de largeur, selon d'autres exemples 150m de long. Le rapport entre la longueur d'un bassin et sa largeur est de 1/10 (en général). Ces bassins peuvent atteindre plusieurs centaines de mètres.

Il existe trois types de granulés : coulant (dense), semi-flottant, flottant. La fragilité du granulé est proportionnelle à sa compacité, donc à son type et à sa granulométrie. Pour une granulométrie et une température égale, un granulé flottant est donc plus fragile, qu'un granulé coulant. La température d'un granulé est aussi un élément important : cassant lorsqu'il est froid, et friable (se délite) avec une forte température.

Un des objectifs de la présente invention est d'automatiser le système de distribution de granules tout en garantissant sa qualité jusqu'à sa dépose dans le bassin.

Le document FR2668949 décrit un système de distribution de granules pour l'élevage d'animaux aquatiques avec une canalisation d'amenée avec de l'eau. Un des inconvénients de ce document est qu'il est impossible de conserver les granulés en bon état car l'eau les détériore. L'eau étant un fluide incompressible, l'aspiration dans le barillet du volume de granulé, ne permet pas de créer un effet de venturi. La pression et le débit d'eau s'ils sont trop élevé, empêche le granulé de tomber dans le flux d'eau et à ce titre ne permet pas de projeter le granulé à plus d'un mètre du point de distribution. Le dispositif ne permet donc pas d'assurer le nourrissage de tous les individus en même temps

De plus, le granulé est lavé et détruit avant d'être acheminé au bassin. Le potentiel énergétique du granulé est fortement diminué, le granulé n'est pas intégralement conservé.

Aussi, tous les points de dépose sur le bassin sont ouverts en même temps, la perte de charge, dans le sens d'arrivée de l'eau, crée une baisse de la projection du granulé sur le bassin. La surface de projection se réduit progressivement jusqu'au dernier point de distribution.

Ce dispositif ne permet donc pas non plus d'assurer une répartition homogène optimale et simultanée sur toute la surface.

Le document WO90/07874 décrit un système de distribution de granules pour l'élevage d'animaux aquatiques avec une canalisation d'amenée, un dispositif de dosage, une vanne d'aiguillage.

Toutefois ces documents ne permettent pas de prendre en compte des informations du bassin dans la distribution de nourriture.

De plus, entre chaque point de dépose la tuyauterie est vidée, ce protocole trop lent crée une excitation du cheptel. Cette excitation met en danger le cheptel par une consommation trop forte d'O$^2$.

Ce dispositif ne permet donc pas non plus d'assurer une répartition homogène optimale et simultanée sur toute la surface du bassin.

OBJET DE L'INVENTION

La présente invention vise à remédier à ces inconvénients.

A cet effet, la présente invention vise un système de distribution de granules pour l'élevage d'animaux aquatiques, remarquable en ce qu'il comprend :

- une canalisation d'amenée par jet d'air adaptée à acheminer des granules dans au moins deux points de dépose d'un bassin d'élevage,
- un dispositif de dosage de granules comportant une zone de stockage de granules avec une sortie,
- un dispositif de distribution de granules comportant une entrée de granules reliée au dispositif de dosage et une sortie reliée à la canalisation d'amenée,
- une vanne d'aiguillage positionnée dans la canalisation d'amenée, ladite vanne d'aiguillage comprenant un orifice d'entrée et au moins deux orifices de sortie,
- au moins un bassin d'élevage, le bassin comporte un capteur de mesure du milieu aquatique sélectionné parmi :

un capteur de température, un capteur du taux de nitrate, un capteur de mesure d'oxygénation, un capteur de turbidité, un capteur niveau sonore,

- un terminal communiquant adapté à la lecture d'information du système et la commande de distribution de nourriture,
- une unité de commande comporte :

  ▪ une base de données d'information de la quantité de granules à distribuer pour un bassin,
  ▪ un moyen de traitement des données de la base de données pour envoyer l'information de la quantité de granules au dispositif de dosage pour un bassin,
  ▪ un moyen de traitement des données de la base de données pour envoyer un jet d'air proportionnel à la distance du point de dépose,
  ▪ un moyen de communication adapté à échanger les données de capteur avec le terminal communiquant,

l'unité de commande étant pilotée par le terminal communiquant.

Grâce à ces dispositions, le système assure la prise en charge des granulés jusqu'à sa dépose tout en gardant sa qualité.

Les capteurs des vannes permettent d'enregistrer en temps réel les paramètres environnementaux inhérents à la formule qui détermine la masse de granulé à donner lors du repas. Ces données permettent d'interagir en temps réel sur la masse à distribuer et donc d'optimiser les repas et le nourrissage en temps réel.

L'invention est avantageusement mise en oeuvre selon les modes de réalisation et les variantes exposées ci-après, lesquelles sont à considérer individuellement ou selon toute combinaison techniquement opérante.

Dans un mode de réalisation, la dépose de granules dans au moins un point du bassin d'élevage est effectuée de façon simultanément ou alternativement par bassin ou par point de dépose.

Grâce à ces dispositions, le système permet de reproduire le savoir faire de l'utilisateur expérimentée par exemple en utilisant l'information des capteurs de turbidité.

Dans un mode de réalisation, la sortie de la zone de stockage de granules, est une trémie de pesée adaptée à peser une quantité de granules. Disposée sur pesons, la trémie permet un dosage précis (tolérance à 10 grammes), et de doser en temps masqué pendant que la trémie de temporisation se vide.

Selon, un exemple, chaque trémie à une capacité de 30kg, on peut donc envoyer des repas de 30 kg en plusieurs séquences continues : le barillet ne s'arrête pas.

Voici ci-dessous, la gestion précise des trémies qui alimentent la trémie de pesée :

a. Phase de démarrage : création d'une rampe de démarrage jusqu'à 100% sur 10s.
b. Phase d'utilisation nominal : Fonctionnement à 100% jusqu'à 75% du poids final.
c. Phase d'arrêt dégressif : La vitesse d'arrêt est proportionnellement inverse à l'augmentation du poids dans la trémie, de 75% à 95% du poids final.
d. Phase d'arrêt total : Fonctionnement à 5% de la vitesse nominale de 95% à 100% du poids final.

Dans un mode de réalisation, une trémie de temporisation est positionnée entre la trémie de pesée et l'entrée du dispositif de distribution de granules. La trémie de temporisation a une capacité de 30kg. Ainsi, il n'y pas de temps d'arrêt entre deux repas. Le temps global de nourrissage est diminué. Le fonctionnement est rapide par exemple, 30kg/min. De ce fait, il y a une économie d'énergie de fonctionnement.

Ainsi, la trémie de temporisation et la trémie de pesée permettent une pesée en temps masqué pendant la phase d'injection des granulés.

Dans un mode de réalisation, après l'entrée de granules dans le dispositif de distribution de granules se trouve un séparateur rotatif adapté à séparer la quantité de granules en au moins deux parties.

Dans un mode de réalisation, le séparateur comprend au moins une ailette. L'embouchure ouverte de la trémie est positionnée au-dessus du séparateur comprenant un premier plateau en rotation, divisé en compartiments égaux par une ou plusieurs ailettes. Le bas de cette trémie est disposé à une distance du plateau rotatif afin qu'un tas de granulé se forme au bas de la trémie. Les granulés forment un petit tas (motte de granules) en embouchure de la trémie d'injection et sont poussés délicatement par la ou les ailettes du dit séparateur. L'axe du mouvement rotatif est parallèle à l'axe de sortie de la trémie. Ce premier niveau est appelé barillet séparateur rotatif.

Dans un mode de réalisation, chaque partie de granules tombe par effet de la gravité dans un contenant de forme cylindrique d'un barillet rotatif, le contenant a un volume supérieur au volume de chaque partie de granule. La contenance du deuxième niveau du barillet reçoit toujours du premier niveau, un volume de granulé plus petit, ainsi lors de la rotation les granulés ne sont pas broyés par un effet de cisaillement induit par la rotation et notamment par le premier plateau en rotation situé entre le niveau 1 et le niveau 2.

Dans un mode de réalisation, après rotation du barillet rotatif selon un pas, le contenant se trouve dans une position étanche, puis selon un autre pas, le volume tombe par un effet de gravité dans la canalisation d'amenée. La réception des granulés dans un volume du niveau 2 est réalisé en dehors du flux d'air, afin d'éviter que la pression du flux d'air ne fasse éjecter les granulés. La canalisation d'air doit rester étanche jusqu'au point d'amenée. Donc le point de réception du deuxième niveau est différent du point de dépose dans le flux. Lors de la rotation du barillet à deux niveaux ; l'étanchéité du flux d'air est maintenue.

Les deux niveaux de barillet tournent suivant un même axe en simultané (même actionneur), mais peuvent être autonomes recevant chacun leur propre actionneur de rotation, tournant alors à des vitesses différentes mais synchronisées (variateurs), pour augmenter la finesse du dosage (équivaut a faire varier le nombre d'ailette du premier niveau).

Dans un mode de réalisation, la vanne d'aiguillage comporte un corps de vanne de forme cylindrique circulaire ou rectangulaire entre une première extrémité et une deuxième extrémité.

Dans un mode de réalisation, la première extrémité est plane dans laquelle l'orifice d'entrée est positionné, l'orifice d'entrée est de forme circulaire et comporte un axe de révolution positionné selon une parallèle de l'axe longitudinal de la vanne d'aiguillage.

Dans un mode de réalisation, la deuxième extrémité est plane et comporte une calotte sphérique sur laquelle sont positionnés les orifices de sortie, chaque orifice de sortie est de forme circulaire. Le plan de joint de la calotte sphérique assure une meilleure étanchéité à des fortes pressions, pour une usure réduite et une fiabilité mécanique accrue.

Dans un mode de réalisation, la vanne d'aiguillage comporte un boisseau mobile contenu dans le corps de vanne d'aiguillage, ledit boisseau mobile comporte un conduit traversant et rigide adapté à faire communiquer sélectivement l'orifice d'entrée avec un des orifices de sortie. Le boisseau rigide permet de garantir une tenue. Le boisseau mobile a un diamètre intérieur intégral et continu.

Dans un mode de réalisation, la vanne d'aiguillage comporte un dispositif débrayable adapté à couper la communication entre l'orifice d'entrée et un des orifices de sortie. Un débrayage manuel permet à l'utilisateur de prendre la main sur le système à tout moment notamment en cas de maintenance.

BREVE DESCRIPTION DES FIGURES

D'autres avantages, buts et caractéristiques de la présente invention ressortent de la description qui suit faite, dans un but explicatif et nullement limitatif, en regard des dessins annexés, dans lesquels :

- la figure 1, un schéma d'un exemple d'installation du système comprenant des éléments d'un mode de réalisation particulier du système objet de la présente invention,
- la figure 2, un schéma d'un exemple de certains éléments d'un mode de réalisation particulier du système objet de la présente invention,
- les figures 3 à 5 expliquent le fonctionnement de distribution des granulés selon un mode de réalisation particulier du système objet de la présente invention,
- la figure 6 représente une courbe du réglage du variateur des pompes à air,
- la figure 7 représente une vue de la vanne d'aiguillage selon une mode de réalisation particulier du système objet de la présente invention,
- la figure 8 représente une vue de la vanne d'aiguillage sans le corps de ladite vanne d'aiguillage selon une mode de réalisation de la figure 6,
- la figure 9 représente le boisseau mobile selon un mode de réalisation particulier,
- la figure 10 représente une vue de la vanne d'aiguillage avec une coupe de la canalisation d'amenée dans laquelle sont visibles les granulés,
- les figures 11 et 12 montrent le fonctionnement débrayable de la vanne d'aiguillage,
- la figure 13 représente une vue de détails de la calotte sphérique.

DESCRIPTION D'EXEMPLES DE REALISATION DE L'INVENTION

Le système de distribution de granules pour l'élevage d'animaux aquatiques est modulaire, automatique et autonome et s'adapte à de nombreuses exploitations existantes. Il permet le dosage et la distribution de pulvérulents (granulés) pour l'élevage d'animaux. Il permet de déposer précisément en un point ou plusieurs points simultanés ou alternativement des granulés, quelle que soit la distance à parcourir et quelle que soit la granulométrie (200 microns à Ø12mm), et le poids (quelques grammes à plusieurs tonnes).

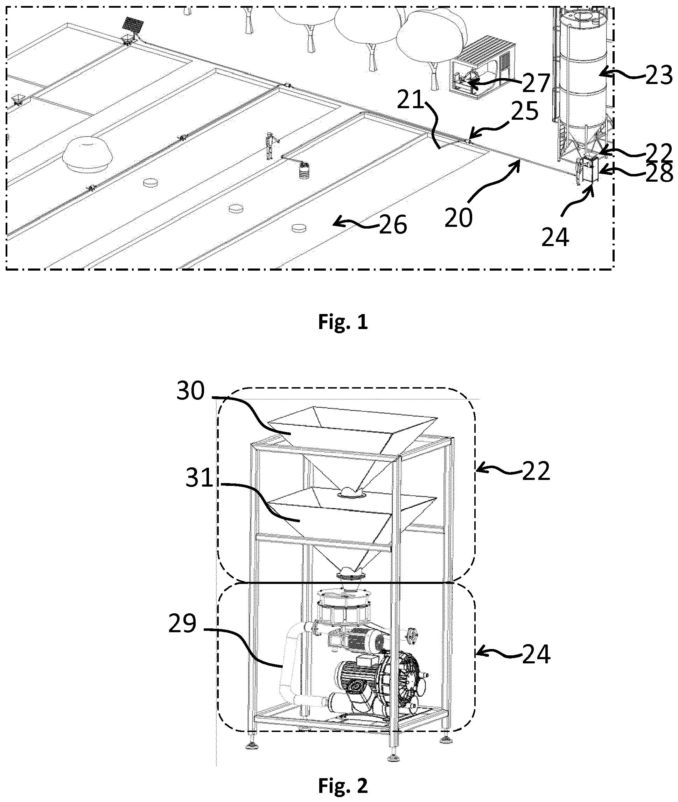

La figure 1 représente un exemple d'installation du système.

Le système de distribution de granules pour l'élevage d'animaux aquatiques, comprenant une canalisation d'amenée 20 par jet d'air adaptée à acheminer des granules dans au moins un point de dépose 21 d'un bassin d'élevage 26. Dans un autre exemple, il existe plusieurs points de dépose 21 pour un même bassin. Le système décrit aussi un dispositif de dosage 22 de granules comportant une zone de stockage de granules avec une sortie. La zone de stockage est représentée par des silos.

Le système décrit également un dispositif de distribution 24 de granules comportant une entrée de granules reliée au dispositif de dosage 21 et une sortie reliée à la canalisation d'amenée 20.

Le système décrit une vanne d'aiguillage 25 positionnée dans la canalisation d'amenée 20. La vanne d'aiguillage 25 comprenant un orifice d'entrée et au moins deux orifices de sortie. Selon des variantes non représentées, la vanne d'aiguillage comprend trois, quatre, cinq... orifices de sortie.

Le système décrit au moins un bassin d'élevage 26. Sur cette figure, il existe plusieurs bassins. Chaque bassin comporte un capteur de mesure (non représenté) du milieu aquatique sélectionné parmi : un capteur de température, un capteur du taux de nitrate, un capteur de mesure d'oxygénation, un capteur de turbidité, un capteur niveau sonore.

Selon un autre exemple, tous ces capteurs mesurent un bassin seul d'élevage. Dans le cas où il existe plusieurs bassins, chaque bassin comporte plusieurs capteurs de mesures.

Le système décrit un terminal communiquant 27 adapté à la lecture d'information du système et la commande de distribution de nourriture. Sur cette figure, il est représenté un utilisateur dans une cabine et un autre utilisateur au niveau du dispositif de distribution 24. Il existe un autre terminal communiquant à cet endroit.

Le protocole de transfert des granulés se fait à travers un réseau de conduite d'amenée et réalisé par des vannes d'aiguillages de plusieurs voies. Le nombre de voies est non limité. Dans l'absolu, on peut imaginer une infinité de voies. Ces vannes permettent d'aiguiller le flux de granulés vers le point de dépose sélectionné, dans l'exemple représenté ci dessus un bassin. Le réseau de conduite d'amenée, où les conduites d'amenée se divisent à chaque vanne d'aiguillage, créant ainsi un réseau. Dans cet exemple piscicole, la conduite d'amenée est un diamètre nominal DN 50.

Toute la conduite d'amenée (tuyauterie) est configurée pour ne pas altérer le granulé, à savoir : coudes très grands rayons (rayon à la fibre neutre mini de R400mm pour un diamètre de 50 mm intérieur soit une courbure qualifiée 8R), montée positive gravitaire inférieure à 30cm sur pente de 20° maximum.

Le réseau est composé de conduites principales appelées pour la suite « Ligne mère » qui démarrent du dispositif de distribution, puis longent les rangées de bassins. Les piscicultures sont constituées d'une ou plusieurs rangées de bassins. Entre deux bassins, une vanne d'aiguillage est disposée. Cette vanne d'aiguillage est principalement composée de deux voies, c'est-à-dire deux orifices de sorties. Selon un autre exemple, la vanne d'aiguillage comporte trois voies en version standard, mais une voie est volontairement bouchée pour créer un orifice pour la maintenance. Dans un autre exemple, la vanne d'aiguillage se décline en version trois voies. Par exemple la troisième voie permet la maintenance de la conduite.

De cette vanne d'aiguillage, une conduite longe la séparation de deux bassins. Le long de cette conduite, y sont disposées à intervalle déterminé, plusieurs vannes trois voies. Le fait d'avoir plusieurs vannes d'aiguillage va permettre d'avoir plusieurs points de dépose dans un même bassin.

Cette conduite est appelée « ligne fille » ; elle permet de distribuer deux bassins, laissant l'accès de l'autre bassin mitoyen pour le pisciculteur.

Les trois derniers bassins d'une rangée sont gérés par une unique vanne d'aiguillage trois voies, afin d'économiser une vanne.

La figure 2 représente certains éléments d'un mode de réalisation particulier du système.

Cette figure montre le dispositif de dosage 22 et le dispositif de distribution 24.

Dans le dispositif de distribution 24, avant que l'air ne touche le granulé, il existe selon ce mode de réalisation un échangeur thermique. L'échangeur thermique est constitué d'une double enveloppe de refroidissement. De l'eau est puisée par une pompe dans la rivière et y est rejetée. L'entrée d'eau est en point eau. La section de sortie est réduite par un orifice calibré pour permettre le remplissage de l'échangeur. Le débit d'entrée est supérieur au débit de sortie, assurant le remplissage. Le temps de montée en température de l'air est inférieur au temps de remplissage de l'échangeur. La surface d'échange de la tubulure est calculée, pour ne pas avoir besoin de régulation de température ou d'électrovanne. Le dispositif de refroidissement est piloté par l'unité de commande et à l'aide de mesure de température, le dispositif de refroidissement comporte une vidange de l'échangeur thermique par effet de gravité, notamment pour préserver l'échangeur thermique en cas de gel.

Cette figure montre une trémie de pesée 30 adaptée à peser une quantité de granules et une trémie de temporisation 31 est positionnée entre la trémie de pesée et l'entrée du dispositif de distribution de granules.

La trémie de pesée 30 est posée sur des pesons et permet de peser la quantité de granules désirée.

Ce principe de double trémie permet une pesée en temps masqué pendant la phase d'injection des granulés.

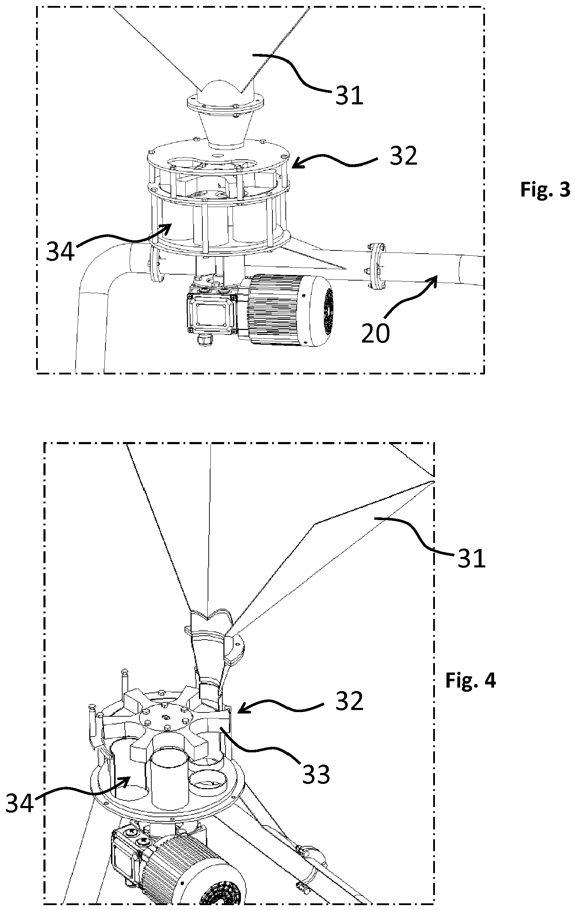

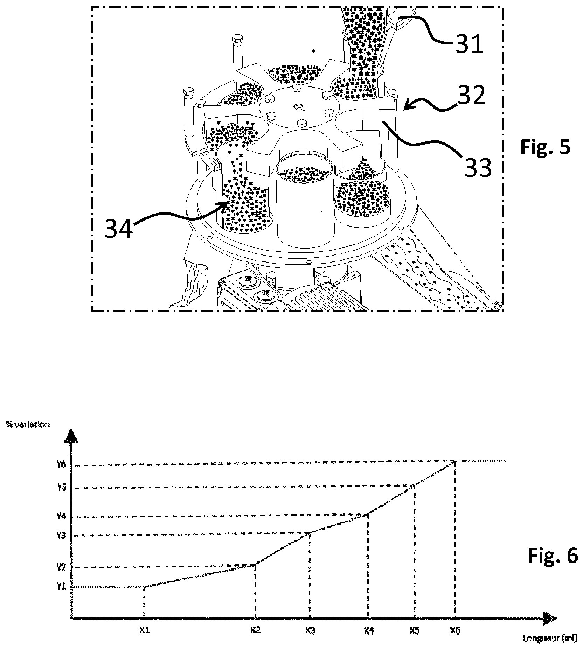

Les figures 3 à 5 expliquent le fonctionnement de distribution des granulés. Les granules sont représentés uniquement sur la figure 5. Les figures 4 et 5 sont des vues en coupe.

Après l'entrée de granules dans le dispositif de distribution 24 de granules se trouve un séparateur rotatif 32 adapté à séparer la quantité de granules en au moins deux parties. Dans l'exemple représenté, le séparateur rotatif 32 comprend six ailettes 33.

Chaque partie de granules tombe par effet de la gravité dans un contenant de forme cylindrique d'un barillet rotatif 34. Le contenant a un volume supérieur au volume de chaque partie de granule.

Après rotation du barillet 34 selon un pas, le contenant se trouve dans une position étanche, puis selon un autre pas, le volume tombe par un effet de gravité dans la canalisation d'amenée.

Dans une variante, la rotation est continue.

La figure montre deux étages, le premier étage correspond au séparateur rotatif 32 muni d'ailette 33 et le deuxième étage correspond au barillet rotatif 34.

Les granulés tombent dans le premier étage du séparateur rotatif 32. Le premier étage est constitué de six compartiments rotatifs séparés par une ailette 33. Le premier étage et le deuxième étage sont séparés par un plateau fixe au bâti sur lequel tombent les granulés. Le plateau est ouvert à certains endroits pour faire tomber par effet de gravité les granulés du premier étage vers le deuxième étage. Les ouvertures sont diamétralement opposées au point de dépose (180°). Le séparateur rotatif 32 entraîne le volume de granulés en rotation sur 180°, pour le déposer délicatement dans les contenants du barillet rotatif 34.

Le deuxième étage comprend des contenants dont le volume est égal à 75% du volume des 6 compartiments rotatifs.

Le principe est de ne jamais remplir intégralement un injecteur, afin de ne pas broyer le granulé. En effet, un cisaillement est possible entre les pièces en rotation et le plateau. La position angulaire des contenants et ailettes 33 est ajustée pour éviter tout broyage.

Sur le même principe, la canalisation d'amenée contenant de l'air en pression et le deuxième étage sont séparés par un plateau fixe (ou platine) au bâti. Une ouverture est réalisée dans le plateau. L'ouverture est diamétralement opposée au point de remplissage des contenants (180°). La rotation du barillet entraîne le volume de granulés en rotation sur 180°, pour le déposer délicatement dans le flux d'air.

Les deux étages (séparateur rotatif 32 et barillet rotatif 34) sont entraînés par le même axe. La motorisation de cet axe utilise un motoréducteur composé d'un frein et d'un variateur. A l'image des doubles trémies, le séparateur rotatif 32 et le barillet rotatif 34 permettent une séparation en temps masqué pendant l'injection des granulés dans la canalisation d'amenée par une buse. Cette buse favorise l'écoulement du flux de granulés par l'air pressurisé. En fonction du débit de la pompe, l'accélération instantanée que subi un granulé isolé est importante.

Selon une variante, et pour ne pas détériorer le granulé, une buse tangentielle est positionnée sous le point d'injection.

Mode de transfert : proportionnel débit/poids :

Pour ajuster la consommation d'énergie (notion écologique) et la vitesse des granulés nécessaire et suffisante pour ne pas les détériorer, le moteur de la pompe à air est accouplé à un variateur pour permettre une gestion de la puissance proportionnellement à la distance du point de dépose. Chaque position (distance) de vanne par rapport à la vanne qui la précède est enregistrée dans le système. Ainsi la distance à parcourir par les granulés est affectée pour chaque vanne. Ainsi, le système permet aussi de contrer les pertes de charges.

La figure 6 représente une courbe du réglage du variateur des pompes à air paramétrables qui dépend de la configuration du site et du nb de coudes notamment.

Selon cet exemple, dans une version standard avec deux coudes et 5 vannes sur le parcours du flux de granulé on a :

$$Y1 = 30\% \text{ -}x1 = 0$$

$$Y2 = 40\% \text{ -}x2 = 25m$$

y6=100% - x6= 300m (données pour une pompe donnant 385mBar 580m3/h)

Pilotage du variateur de la pompe à air :

a. Le démarrage de la pompe à air est effectué en vingt secondes avant l'introduction des granulés dans le flux d'air (ce temps sera paramétrable).

b. Le pilotage du variateur se fait en fonction de la perte de charge de la tuyauterie jusqu'à la vanne. Une courbe en six points réglables permet d'obtenir la consigne du variateur.

c. Une longueur par vanne est affectée pour le calcul de la longueur globale (longueur depuis vanne précédente, paramétrable).

d. La temporisation d'arrêt de la pompe à air sera proportionnelle à la longueur de la tuyauterie. Cette fonction sera paramétrable en fonction de la longueur de tuyauterie et d'un coefficient k.

En fonction du type de granulé (fragilité) et de la granulométrie de granulé la quantité de granulés injectés par unité de volume d'air est proportionnelle. Par exemple, en considérant des granulés de Ø2mm (A) et des granulés Ø9mm (B), à poids égal de granulés A + B, et de distance égale à parcourir (réglage pompe air identique), la distance moyenne entre les granulés en sortie du dispositif de distribution est plus élevée pour A que pour B. Plus on augmente la distance à parcourir, plus la distance moyenne entre les granulés augmente. Le flux de granulés s'effondre pour former une rivière de granulés en point bas de la conduite d'amenée (test sur une conduite posée sur un sol parfaitement plat) : il existe un phénomène caractéristique d'une masse trop importante à transporter. La puissance de distribution diminue beaucoup. C'est pourquoi, à distance égale à parcourir, un granulé de forte masse sera plus dur à transporter qu'un granulé léger. Le moteur du barillet rotatif est sur variateur. L'objet est de maîtriser la puissance de distribution en kg/min, en maîtrisant la distance moyenne entre les granulés caractéristiques du mode d'écoulement des pulvérulents, tout en évitant le phénomène de « rivière » en fonction de la cible de dépose et du diamètre du granulé.

Ci-dessous un exemple de calcul de données du système pour un type de granulé.

1 tour = 1 kg à densité 1,6 litres par kg sur 6 compartiments soit 1 compartiment égale 166.67gr

| type de granulé | 1 | 2 | 3 | 4 | 5 | 6 | 7 |
|---|---|---|---|---|---|---|---|
| **diamètre granulé** | **1,9** | **3** | **4,5** | **6,5** | **9** | **11** | **12** |

Vitesse de rotation nominale (base calcul):

Granulé flottant (densité = 1.2)= 20 tr/min soit 20kg /min (paramétrable à l'afficheur) à L=150m
Granulé semi-flottant (densité = 1.4)= 20 tr/min soit 20kg /min à L=125m
Granulé coulant (densité = 1.6)= 20 tr/min soit 20kg /min à L=100m

Règle de correction vitesse du barillet en fonction de la distance et du type et du diamètre du granulé : Règle d'optimisation du transfert.

Réduction de 1 tr/min par 20m au variateur dans la limite de 10kg/min à partir de L figé.

Au delà la puissance de la pompe est augmentée de 5% par 20m limite à 100%.

Les fonctions simplifiées de dosage permettent de s'affranchir de cette fonction et de forcer un nb de kg/min en accédant au terminal de commande.

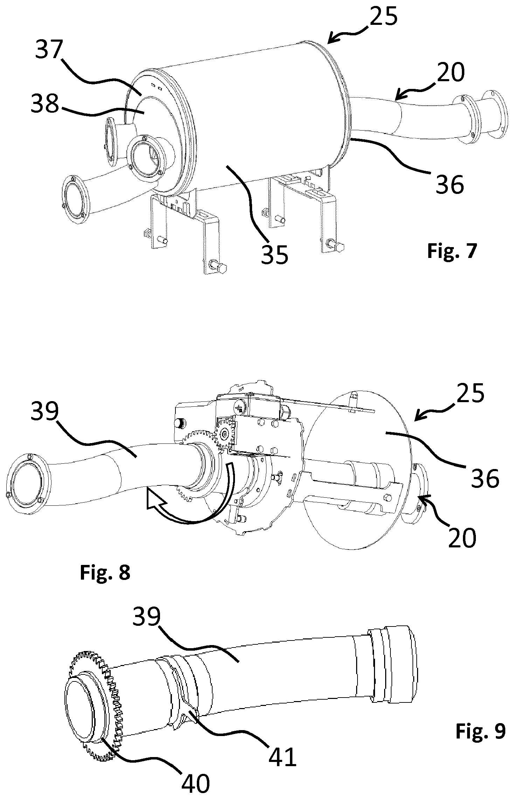

Les figures 7 et 8 représentent une vue de vanne d'aiguillage 26.

La vanne d'aiguillage 26 comporte un corps de vanne de forme cylindrique circulaire entre une première extrémité 36 et une deuxième extrémité 37.

La première extrémité 36 est plane dans laquelle l'orifice d'entrée est positionné. L'orifice d'entrée est de forme circulaire et comporte un axe de révolution positionné selon une parallèle de l'axe longitudinal de la vanne d'aiguillage.

La deuxième extrémité 37 est plane et comporte une calotte sphérique 38 sur laquelle sont positionnés les orifices de sortie. Chaque orifice de sortie est de forme circulaire.

La vanne d'aiguillage 25 comporte un dispositif débrayable adapté à couper la communication entre l'orifice d'entrée et un des orifices de sortie.

La vanne d'aiguillage 25 comprend de l'inox.

Dans une autre variante, la vanne d'aiguillage 25 est en inox.

La vanne d'aiguillage 25 est étanche jusqu'à 6 bar (pression statique).

Le raccordement à la tuyauterie existante est de tout type alimentaire, par exemple selon les normes NF (acronyme de norme française), DIN (acronyme de Deutsches Institut Normung), SMS (acronyme de Swedish Metric Standard)...

Selon des exemple de réalisation, le raccord SMS est composé d'un raccord mâle, d'un raccord femelle, d'un joint pour l'étanchéité ainsi que d'un écrou pour relier les deux raccords ; le raccord DIN : composé d'un raccord mâle, d'un raccord femelle, d'un joint pour l'étanchéité ainsi que d'un écrou pour relier les deux raccords ; le raccord MACON (marque déposée) : composé d'un Raccord mâle, d'un raccord femelle, d'un joint pour l'étanchéité ainsi que d'un écrou pour relier les deux raccords ; le raccord CLAMP (marque déposée) : composé d'un Raccord mâle, d'un raccord femelle, d'un joint pour l'étanchéité ainsi que d'un collier pour relier les deux raccords.

La figure 9 représente le boisseau mobile 39.

La vanne d'aiguillage 25 comporte un boisseau mobile 39 contenu dans le corps 35 de vanne d'aiguillage 25. Le boisseau mobile 39 comporte un conduit traversant et rigide adapté à faire communiquer sélectivement l'orifice d'entrée avec un des orifices de sortie. Le boisseau mobile est mobile en rotation et permet d'assurer l'étanchéité entre l'orifice d'entrée et un des orifices de sortie. La rotation est effectuée au niveau d'une des extrémités du boisseau mobile, l'extrémité qui se trouve à proximité de l'orifice d'entrée de la vanne d'aiguillage 25.

Le boisseau mobile est cintré d'un angle de l'ordre de 20°, suivant un rayon de courbure à la fibre neutre de R400mm.

Le boisseau mobile 39 est mis en rotation par un système motorisé. Aux extrémités du coude sont soudés des pièces inox. En entrée un axe vient recevoir une roue dentée 40; cette pièce sert aussi de guidage en rotation. Un drapeau, y est soudé précisément par rapport au plan de cintrage. Il permet l'arrêt en rotation du moteur. A l'extrémité du boisseau mobile se trouve un manchon inox qui reçoit une pièce cylindrique de révolution circulaire en PTFE (acronyme de polytétrafluoroéthylène) en liaison pivot glissant.

Entre le manchon inox et la pièce cylindrique est positionné un ressort, non représenté. Selon une autre variante, c'est un joint en élastomère.

Ce ressort pousse la pièce cylindrique sur la calotte sphérique, afin de garantir l'étanchéité.

Gestion du temps réel

La granulométrie et le poids à distribuer pour chaque bassin sont définis par un logiciel de nourrissage spécifique. Le poids journalier à distribuer est défini par le nombre de poissons dans le bassin, son âge, sa taille, son espèce, la saison, l'environnement (qualité de l'eau, présence de prédateurs...), les conditions géographique (altitude, environnement, etc..) les conditions climatiques (Pression atmosphérique, T°C de l'eau, T°C d'Oxygène...etc.).

Tous les signaux analogiques (type 0-10V, 4-20mA, 0-20mA) ci-dessous, sont connectés au système, et sont retransmis en temps réel à l'opérateur (fréquence maxi de transmission limité à la vitesse de scrutation du système, soit moins de 8ms) : (listing non -exhaustif).

- T°C eau : consigne de correction ou d'arrêt de nourrissage sur seuil bas et haut. Selon un exemple, si la température est supérieure à 6.5°c alors arrêt nourrissage.
- son : consigne d'arrêt de nourrissage du bassin sur seuil bas. Niveau d'activité sonore est caractéristique d'un faible appétit (alarme non bloquante). Selon un exemple, si le seuil atteint 20db alors arrêt du nourrissage.
- Turbidité : consigne d'arrêt de nourrissage du bassin sur seuil haut. Selon un exemple, si turbidité est supérieur à 1 uTN (pour Unité de Turbidité Néphélométrique) alors arrêt nourrissage.
- O2 control consigne d'arrêt de nourrissage du bassin sur seuil bas. Selon un exemple, si O2 est supérieur à 10 mg/litre arrêt nourrissage, alors démarrage aérateur et oxygénateur.
- NH4 control consigne d'arrêt de nourrissage du bassin sur seuil haut. Selon un exemple, si le pH est en dehors des plages 6,8 et 8 alors arrêt nourrissage.

Pour chacun de ces signaux, un seuil d'alerte est défini par l'opérateur au terminal communiquant du système.

Le système envoi l'information de dépassement du seuil à l'unité de commande et au terminal communiquant.

Le système déclenche les actions définies par le protocole :

Niveau sécurité : le système met le bassin en sécurité et informe le terminal communiquant du niveau de sécurité. En mode sécurité le système prend seul la décision d'agir mais informe toujours le terminal communiquant.

L'unité de commande comporte :

- une base de données d'information de la quantité de granules à distribuer pour un bassin,
- un moyen de traitement des données de la base de données pour envoyer l'information de la quantité de granules au dispositif de dosage pour un bassin,
- un moyen de traitement des données de la base de données pour envoyer un jet d'air proportionnel à la distance du point de dépose,
- un moyen de communication adapté à échanger les données de capteur avec le terminal communiquant,

L'unité de commande est pilotée par le terminal communiquant.

Ajustement de la pompe

La puissance de la pompe est ajustée en fonction de la longueur du point de dépose et de la densité du granulé.

Pour chaque vanne d'aiguillage la distance de tuyauterie jusqu'au doseur est enregistrée à la mise en service pour toutes les vannes d'aiguillage de bassin des lignes filles (pas les aiguillages sur les lignes mères) : bassin par bassin, vanne pas vanne. La distance entrée par l'opérateur est la distance à la vanne d'aiguillage en amont.

La vitesse de rotation du barillet rotatif est ajustée à la capacité de distribution en kg/min.

Selon une variante, une temporisation existe entre deux distributions de granulés. Une vidange de la ligne bassin du dépôt résiduel de granulé : c'est-à-dire après la fin de distribution, la pompe à air est maintenue à 100% de son fonctionnement pendant une durée :
La temporisation d'arrêt de la pompe à air sera proportionnelle à la longueur de la tuyauterie. Cette fonction sera paramétrable en fonction de la longueur de tuyauterie et d'un coefficient k.

La tuyauterie est étanche sur toutes les voies.

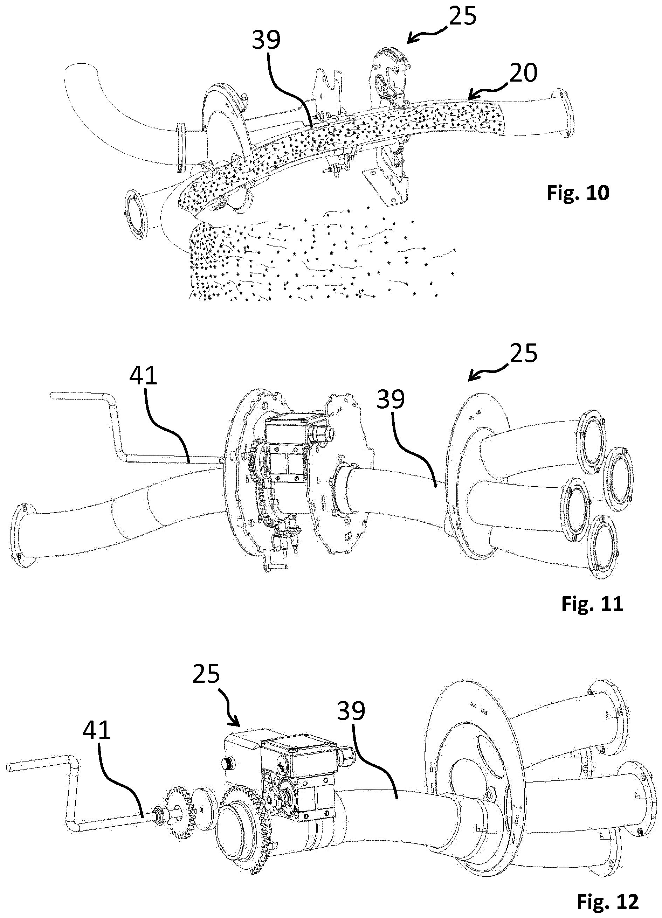

La figure 10 représente une vue de la vanne d'aiguillage 25 avec une coupe de la canalisation d'amenée 20 dans laquelle sont visibles les granulés.

Les figures 11 et 12 montrent le fonctionnement débrayable de la vanne d'aiguillage 25.

La vanne d'aiguillage 25 comporte un insert pour une manivelle 41 et permettre le débrayage manuel.

Dans cet exemple, la vanne possède quatre orifices de sortie.

Le boisseau mobile 39 est accouplé à un moteur par un engrenage adapté à faire communiquer sélectivement l'orifice d'entrée avec un des orifices de sortie. Le boisseau mobile est rigide.

Le dispositif débrayable est adapté à couper la communication entre l'orifice d'entrée et un des orifices de sortie pour la maintenance de la vanne d'aiguillage. Le dispositif débrayable comporte des roues dentées couplées à un disque ayant un trou de forme rectangulaire et permet de désaccoupler l'entraînement du boisseau mobile.

Lorsque l'on insert la manivelle 41 dans le disque, l'extrémité de la manivelle va pousser une roue dentée pour désaccoupler l'engrenage du boisseau mobile avec le moteur d'entraînement.

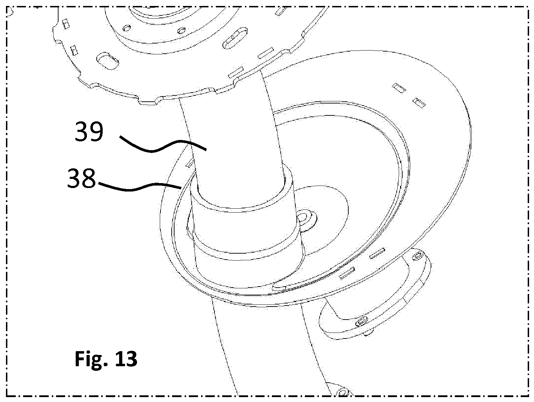

La figure 13 montre une vue de détails de la calotte sphérique 38. La calotte sphérique 38 comporte, en outre, un disque mobile articulé d'un axe et qui suit le boisseau mobile et assure l'étanchéité.

Le boisseau mobile 39 comporte un embout monté en pivot glissant sur le boisseau mobile en contact avec la calotte sphérique par un moyen de rappel. L'embout étant adapté à réaliser l'étanchéité entre le boisseau mobile et l'un des orifices de sortie.

Descriptif du fonctionnement selon un exemple de réalisation :
Le système de distribution est composé d'un doseur, permettant de fournir une quantité de granulés sans l'abimer.

Le granulé est extrait d'un silo de stockage par une vis sans fin motorisée gérée par un variateur de fréquence. Le produit tombe dans une trémie disposée sur pesons. A 90% de la cible de poids, la vitesse de rotation de la vis sans fin est réduite afin d'éviter que des paquets de granulés ne permettent d'atteindre précisément la cible précise du poids. Dès que la cible est atteinte, une trappe rotative transfère le granulé pesé dans une trémie d'injection directement connectée à un barillet rotatif à 2 étages.

Dès que la trappe de la trémie de pesée est fermée, la trémie de pesée est rechargée pour le prochain lot.

Un capteur capacitif de présence granulé est disposé sur la trappe d'injection, donnant le signal de déversement de la trappe de pesée dans la trappe d'injection.

Le dispositif de distribution ou dans ce cas appelé barillet est composé d'un étage compartimenté en au moins deux sections, la trémie d'injection est connectée à un compartiment. Le 1er étage du barillet tourne et récupère un volume de granulé, lors de cette rotation, le volume tombe dans l'étage inférieur du barillet, composé d'au moins deux compartiments étanches, dont le volume est supérieur au volume des compartiments du 1er étage. Le niveau inférieur du barillet est actionné par le même actionneur rotatif que l'étage supérieur. Les deux niveaux sont synchronisés de telle façon que le point de transfert entre les 2 étages est diamétralement opposé au point de chute dans le conduit de granulé.

En amont du barillet une soufflerie, basse pression haut débit, propulse le granulé dans la tuyauterie.

L'air généré par la soufflerie est refroidi, par un échangeur thermique disposé entre la soufflerie et le barillet. Le doseur assure le dosage de la recette en respectant la fragilité thermique et mécanique du granulé.

Les motorisations du barillet de séparation et de la soufflerie sont accouplées à des variateurs de fréquences distinctes. Ce qui permet d'assurer une projection du granulé identique, quelque soit

- La densité et le type de granulé (matières, diamètre),
- La distance entre le doseur et la vanne de bassin de destination, intégrant ainsi les pertes de charge,
- La puissance de nourrissage paramétrée et voulue par le pisciculteur, notamment dû à la cible de nourrissage (type de poison, Age, santé, quantité au m$^2$).

Le système de distribution est composé d'une tuyauterie unique comprenant au moins une vanne d'aiguillage (appelée vanne rangée) composées de trois voies.

- Une voie de droite amenant vers une ligne de tuyauterie, disposée entre deux bassins, débouchant sur au moins une vanne trois voies (appelée vanne de bassin) :

  - La voie de droite d'une vanne bassin, alimente le bassin de droite,

- La voie de gauche d'une vanne bassin, alimente le bassin de gauche,
- La voie centrale dirige le granulé vers une autre vanne bassin.
- Une voie de gauche amenant vers une ligne de tuyauterie, disposée entre deux bassins, débouchant sur au moins une vanne de bassin, suivant le même schéma décrit ci-dessus,
- Une voie centrale amenant vers une autre vanne de rangées, permettant donc de redistribuer un autre couple de 2 bassins.

Le système de distribution dispose d'un système automatique de reconnaissance du synoptique de connexion des vannes entre elles.

Les vannes rangées (primaire, secondaire) et vannes de bassins sont de conception identique ; ce qui assure une maintenance aisée. Les vannes sont connectées entre elles via un connecteur électrique unique, étanche et rapide, assurant la transmission de la puissance électrique et la communication.

Le système intègre automatiquement toutes les évolutions en temps réel (ex : modification de la disposition, ou ajout ultérieur de vannes).

Il est a noté qu'au moins une vanne primaire de rangée peut être intercalée entre le doseur et la première vanne de rangée (alors décrite vanne secondaire de rangée), cet ajout permet notamment d'introduire un point de vidange mais aussi et surtout d'aiguiller l'aliment vers plusieurs sites piscicoles distincts, notamment décrit par des lots de rangées géographiquement différents.

Le protocole de distribution du système de distribution permet de répartir simultanément sur toute une surface à l'aide d'au moins une vanne de bassins par deux points de dépose. Le nombre de vanne est appairé en fonction de la distance de projection souhaitée, de telle sorte que toute la surface soit toujours recouverte.

A ce jour les pisciculteurs utilisent une brouette pour acheminer le granulé au plus proche des bassins, puis à l'aide d'un sot et d'une pelle, ces derniers parcours la longueur du bassin. (nb : Longueur = 10x largeur).

Tout en répartissant le granulé à l'aide de la pelle. Ainsi le repas est réparti sur toute la surface, ne laissant pas la possibilité aux poissons dominant d'empêcher les plus faibles de se nourrir. Le gain de productivité peut atteindre 20%. Le système de distribution permet d'automatiser cette répartition.

Les vannes de rangées se positionnent vers le bassin à nourrir.

Durant la distribution ces dernières restent figées. Le flux (dosage de la recette paramétrée quantité granulé/ débit d'air). Le Doseur envoie le granulé à travers la tuyauterie ; durant cette phase, le flux de granulé n'est pas interrompu.

Le système de distribution permet des variantes dans le mode de distribution, les vannes de bassins changent rapidement et alternativement suivant un des schémas ci-dessous :

- Mode temporel : temporisations égales entre les changements de vanne bassin

  - séquence alternatif temporel montant (vanne basin 1 puis 2, 3, 4...)
  - séquence alternatif temporel descendant (vanne basin 4 puis 3, 2, 1...)
  - changement aléatoire temporel (vanne bassin 3 puis 1,4,2...)

- Mode % poids : un % du poids cible (kg) est affecté à chaque points de dépose de vanne bassin

  - séquence alternatif %poids montant (vanne basin 1 puis 2, 3, 4...)
  - séquence alternatif %poids descendant (vanne basin 4 puis 3, 2, 1...)
  - changement aléatoire %poids (vanne bassin 3 puis 1,4,2...)

Par ce protocole, le système de distribution dispatche la dose du repas sur le bassin à nourrir, en donnant l'illusion de répartir simultanément toute la dose de granulés grâce :

- Au flux constant de granulé,
- Au débit de granulé kg/m$^2$,
- A la vitesse de changement des vannes,
- A la particularité du granulé, qui flotte.

Ainsi, le couplage de ces données permettent à chaque points de distribution, d'exposer plus de granulé qu'il est possible aux poissons de manger dans le temps impartis entre deux changements. Donc les poissons n'ont pas tout consommé suite à la précédente projection, qu'un nouveau jet arrive déjà.

Dans une autre variante, une dose projetée avant le repas sur chaque vanne bassin, pour répartir le cheptel sur le basin.

NOMENCLATURE

| | |
|---|---|
| 20 | canalisation d'amenée |
| 21 | point de dépose |
| 22 | dispositif de dosage |
| 23 | zone de stockage de granules |
| 24 | dispositif de distribution |
| 25 | vanne d'aiguillage |
| 26 | bassin d'élevage |
| 27 | terminal communiquant |
| 28 | unité de commande |
| 29 | dispositif de refroidissement |
| 30 | trémie de pesée |
| 31 | trémie de temporisation |
| 32 | séparateur rotatif |
| 33 | ailette |
| 34 | barillet rotatif |
| 35 | corps de vanne d'aiguillage |
| 36 | première extrémité du corps de vanne d'aiguillage |
| 37 | deuxième extrémité du corps de vanne d'aiguillage |
| 38 | calotte sphérique |
| 39 | boisseau mobile |
| 40 | roue dentée |
| 41 | manivelle |

**Revendications**

1. Système de distribution de granules pour l'élevage d'animaux aquatiques, **caractérisé en ce qu'**il comprend :

   - une canalisation d'amenée (20) par jet d'air adaptée à acheminer des granules dans au moins deux points de dépose (21) d'un bassin d'élevage (26),
   - un dispositif de dosage (22) de granules comportant une zone de stockage de granules avec une sortie,
   - un dispositif de distribution (24) de granules comportant une entrée de granules reliée au dispositif de dosage et une sortie reliée à la canalisation d'amenée,
   - une vanne d'aiguillage (25) positionnée dans la canalisation d'amenée (20), ladite vanne d'aiguillage (25) comprenant un orifice d'entrée et au moins deux orifices de sortie,
   - au moins un bassin d'élevage (26), le bassin comporte un capteur de mesure du milieu aquatique sélectionné parmi : un capteur de température, un capteur du taux de nitrate, un capteur de mesure d'oxygénation, un capteur de turbidité, un capteur niveau sonore,
   - un terminal communiquant (27) adapté à la lecture d'information du système et la commande de distribution de nourriture,
   - une unité de commande (28) comporte :

     ▪ une base de données d'information de la quantité de granules à distribuer pour un bassin,
     ▪ un moyen de traitement des données de la base de données pour envoyer l'information de la quantité de granules au dispositif de dosage pour un bassin,
     ▪ un moyen de traitement des données de la base de données pour envoyer un jet d'air proportionnel à la distance du point de dépose,
     ▪ un moyen de communication adapté à échanger les données de capteur avec le terminal communiquant,

     l'unité de commande étant pilotée par le terminal communiquant.

2. Système selon la revendication 1, dans lequel la dépose de granules dans au moins un point du bassin d'élevage (26) est effectuée de façon simultanément ou alternativement par bassin ou par point de dépose (21).

**3.** Système selon la revendication 1, dans lequel la sortie de la zone de stockage de granules (23), est une trémie de pesée (30) adaptée à peser une quantité de granules.

**4.** Système selon la revendication 3, dans lequel une trémie de temporisation (31) est positionnée entre la trémie de pesée (30) et l'entrée du dispositif de distribution (24) de granules.

**5.** Système selon la revendication 1, dans lequel après l'entrée de granules dans le dispositif de distribution (24) de granules se trouve un séparateur rotatif (32) adapté à séparer la quantité de granules en au moins deux parties.

**6.** Système selon la revendication 5 dans lequel le séparateur comprend au moins une ailette (33).

**7.** Système selon la revendication 5, dans lequel chaque partie de granules tombe par effet de la gravité dans un contenant de forme cylindrique d'un barillet rotatif (34), le contenant a un volume supérieur au volume de chaque partie de granule.

**8.** Système selon la revendication 7, dans lequel après rotation du barillet rotatif (34) selon un pas, le contenant se trouve dans une position étanche, puis selon un autre pas, le volume tombe par un effet de gravité dans la canalisation d'amenée (20).

**9.** Système selon la revendication 1, dans lequel la vanne d'aiguillage (25) comporte un corps de vanne de forme cylindrique circulaire ou rectangulaire entre une première extrémité (36) et une deuxième extrémité (37).

**10.** Système selon la revendication 9, dans lequel la première extrémité (36) est plane dans laquelle l'orifice d'entrée est positionné, l'orifice d'entrée est de forme circulaire et comporte un axe de révolution positionné selon une parallèle de l'axe longitudinal de la vanne d'aiguillage.

**11.** Système selon la revendication 9, dans lequel la deuxième extrémité (37) est plane et comporte une calotte sphérique (38) sur laquelle sont positionnés les orifices de sortie, chaque orifice de sortie est de forme circulaire.

**12.** Système selon la revendication 9, dans lequel la vanne d'aiguillage (25) comporte un boisseau mobile (39) contenu dans le corps (35) de vanne d'aiguillage (25), ledit boisseau mobile (39) comporte un conduit traversant et rigide adapté à faire communiquer sélectivement l'orifice d'entrée avec un des orifices de sortie.

**13.** Système selon la revendication 12, dans lequel la vanne d'aiguillage (25) comporte un dispositif débrayable adapté à couper la communication entre l'orifice d'entrée et un des orifices de sortie.

**Fig. 1**

**Fig. 2**

**Fig. 3**

**Fig. 4**

Fig. 5

Fig. 6

Fig. 7

Fig. 8

Fig. 9

**Fig. 10**

**Fig. 11**

**Fig. 12**

**Fig. 13**

Europäisches
Patentamt

European
Patent Office

Office européen
des brevets

# RAPPORT DE RECHERCHE EUROPEENNE

Numéro de la demande

EP 18 16 3962

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | WO 90/07874 A1 (WENSMAN GUNNAR [SE]) 26 juillet 1990 (1990-07-26) * page 1, alinéa 1 - page 2, alinéa 1 * * page 3, alinéa 13 - page 8, alinéa 3 * * page 9, alinéa 3 - page 12, alinéa 2 * * figures 1-6 * & EP 0 081 538 A1 (WENSMAN GUNNAR [SE]; WENSMAN BRITTA [SE]) 22 juin 1983 (1983-06-22) * colonne 4, ligne 27 - colonne 5, ligne 6 * * figures 9, 10 * | 1-13 | INV. A01K61/80 |
| Y | US 4 359 014 A (MOLAUG OLE ET AL) 16 novembre 1982 (1982-11-16) * colonne 1, ligne 65 - colonne 2, ligne 44 * * colonne 3, ligne 14 - ligne 30 * * figures 1-4 * | 1-13 | |
| Y,D | FR 2 668 949 A1 (SEDIA SARL [FR]) 15 mai 1992 (1992-05-15) * page 4, ligne 16 - page 9, ligne 3 * * figures 1-3 * | 3,4 | **DOMAINES TECHNIQUES RECHERCHES (IPC)** A01K |
| A | JP H03 130028 A (NIPPON ALUMINIUM MFG) 3 juin 1991 (1991-06-03) * page 201, colonne gauche, alinéa haut - colonne droit, alinéa haut * * page 202, colonne gauche, alinéa bas - page 203, colonne gauche, alinéa haut * * figures 1, 5, 6 * | 1,2,5-13 | |

Le présent rapport a été établi pour toutes les revendications

| Lieu de la recherche | Date d'achèvement de la recherche | Examinateur |
|---|---|---|
| La Haye | 20 juillet 2018 | Been, Mathieu |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 16 3962

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-07-2018

| Document brevet cité au rapport de recherche | | Date de publication | Membre(s) de la famille de brevet(s) | | Date de publication |
|---|---|---|---|---|---|
| WO 9007874 | A1 | 26-07-1990 | SE<br>WO | 461311 B<br>9007874 A1 | 05-02-1990<br>26-07-1990 |
| US 4359014 | A | 16-11-1982 | AUCUN | | |
| FR 2668949 | A1 | 15-05-1992 | AUCUN | | |
| JP H03130028 | A | 03-06-1991 | JP<br>JP | H0435128 B2<br>H03130028 A | 10-06-1992<br>03-06-1991 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2668949
- WO 9007874 A